# DEMANDE DE BREVET EUROPEEN

(11) **EP 2 433 849 A1**
(43) Date de publication de la demande: **28.03.2012**
(21) Numéro de dépôt: 11181424.0
(22) Date de dépôt: 15.09.2011
(51) Int. Cl.: B62D 5/04, F16H 1/16

(54) **Direction assistée électrique à double vis sans fin**

(30) Priorité: 28.09.2010 FR 1057787
(71) Demandeur: Jtekt Europe, 69540 Irigny (FR)
(72) Inventeur: Chauvrat, Philippe, 01480 VILLENEUVE (FR); Fauritte, François, 69008 LYON (FR)
(74) Mandataire: Chevalier, Renaud Philippe

(57) **Abrégé**

Dans cette direction assistée de véhicule automobile, un moteur électrique d'assistance (2) unique a son arbre de sortie (4) lié en entraînement de façon permanente à deux vis sans fin (8, 11) qui sont en prise, en deux points distincts, avec la même roue tangente (9), les deux vis sans fin (8, 11) étant entraînées de façon permanente, en synchronisme, mais en sens opposés. La route tangente (9) est elle-même liée à la colonne de direction ou au pignon de direction (13) ou directement à la crémaillère.

## Description

La présente invention concerne, d'une façon générale, les systèmes de direction assistée électrique qui équipent des véhicules automobiles. Plus particulièrement, cette invention s'intéresse à de telles directions assistées, dans lesquelles un moteur électrique est accouplé, par l'intermédiaire d'un réducteur de vitesse à vis sans fin et roue tangente, à un élément tournant tel que la colonne de direction ou le pignon de direction, en vue d'amplifier l'effort manuel exercé par le conducteur du véhicule sur le volant.

Dans un tel système de direction, selon la conception habituelle, un moteur électrique unique a son arbre de sortie directement accouplé à une vis sans fin, laquelle est en prise avec une roue tangente liée en rotation à la colonne de direction ou au pignon de direction - voir par exemple les documents de brevets français FR 2821312 et FR 2829087. Le moteur électrique fournit ainsi un couple, de sens déterminé à un instant donné, à la colonne de direction ou directement au pignon de direction, dont le mouvement de rotation est transmis à la crémaillère qui convertit ce mouvement rotatif en une translation et commande alors l'orientation des roues directrices du véhicule, pour un braquage à gauche ou un braquage à droite. Le réducteur à vis sans fin et roue tangente transmet le mouvement rotatif du moteur électrique à la colonne de direction ou au pignon de direction, en jouant le rôle de réducteur de vitesse et de multiplicateur de couple.

Habituellement, le réducteur est composé d'une roue tangente et d'une seule vis sans fin, en prise avec la roue tangente. L'unicité de la vis sans fin conduit à une dissymétrie des efforts exercés sur la roue tangente, et aussi à des pressions de contact élevées entre la vis et la roue tangente. Ces efforts importants et dissymétriques sont la cause d'une usure des surfaces de contact des dentures, l'usure provoquant elle-même des jeux de fonctionnement. Les jeux de fonctionnement peuvent eux-mêmes produire des vibrations et des chocs, donc des bruits de claquement.

De nombreuses solutions, plus ou moins complexes, en général basées sur l'ajout d'éléments élastiques notamment au niveau des paliers de la vis sans fin, existent déjà pour compenser de tels jeux de fonctionnement - voir par exemple les documents de brevets FR 2911171 et FR 2937607.

Une autre solution connue consiste à doubler la vis sans fin, c'est-à-dire à prévoir deux vis sans fin en prise avec une roue tangente commune. Ceci permet, par différentes stratégies de sollicitation de la roue tangente, de limiter les jeux et les bruits. Une solution particulière est décrite dans le document de brevet FR 2938493.

Selon ce document, le système de direction comprend non seulement deux vis sans fin, mais encore deux moteurs électriques d'assistance, dont les arbres de sortie sont accouplés respectivement aux deux vis sans fin. Un tel ensemble est particulièrement complexe à piloter, en ce qui concerne notamment la coordination des commandes des deux moteurs. Elle a pour inconvénients supplémentaires d'être mécaniquement complexe, lourde, encombrante et coûteuse, alors que dans le domaine automobile se posent des problèmes de place disponible et qu'une réduction des coûts est toujours recherchée.

Le document de brevet DE 197 43691 A1 divulgue une configuration dans laquelle un moteur électrique d'assistance unique entraîne alternativement l'une ou l'autre de deux vis sans fin en prise avec une même roue tangente, deux embrayages à commande électrique étant intercalés respectivement entre le moteur et chaque roue dentée. L'un ou l'autre des deux embrayages est activé, selon le sens de rotation désiré, de sorte qu'à un instant donné le moteur transmet son couple à la roue tangente par l'intermédiaire d'une seule vis sans fin. Cette configuration n'élimine donc pas les inconvénients précédemment énoncés. De plus, elle est complexe et coûteuse du fait de l'implication de deux embrayages et de leurs commandes électriques respectives.

La présente invention vise à remédier à ces inconvénients, en fournissant une solution technique ne nécessitant qu'un seul moteur électrique dans le système de direction assistée, de manière à éviter les problèmes de commande coordonnée de deux moteurs, tout en obtenant un gain d'encombrement et de poids.

A cet effet, l'invention a pour objet une direction assistée électrique de véhicule automobile, dans laquelle un moteur électrique d'assistance est accouplé, par l'intermédiaire d'un réducteur de vitesse à vis sans fin et roue tangente, à un élément tournant tel que la colonne de direction ou le pignon de direction, ou directement à la crémaillère, cette direction assistée électrique étant caractérisée par le fait qu'elle comprend un moteur électrique d'assistance unique, dont l'arbre de sortie est lié en entraînement de façon permanente à deux vis sans fin qui sont en prise, en deux points distincts, avec la même roue tangente, les deux vis sans fin étant entraînées en rotation de façon simultanée en synchronisme mais en sens opposés.

Les deux vis sans fin sont, en particulier, sensiblement parallèles l'une à l'autre, et elles viennent dans ce cas en prise avec la route tangente commune en deux points diamétralement opposés de cette roue.

Dans une forme de réalisation de l'invention, l'arbre de sortie du moteur électrique porte une première roue dentée, qui est en prise avec deux autres roues dentées, dont l'une est solidaire en rotation d'une première vis sans fin tandis que l'autre est elle-même en prise avec une dernière roue dentée, solidaire en rotation de la seconde vis sans fin. La roue dentée portée par l'arbre de sortie du moteur transmet ainsi la puissance d'assistance aux deux roues dentées, qui elles-mêmes actionnent en synchronisme les deux vis sans fin pour appliquer un couple de rotation à la roue tangente, en prise avec ces deux vis sans fin.

L'invention permet de conserver les avantages d'une double vis sans fin, ici rappelés :
- D'une part, pour un couple donné, on obtient par l'action simultanée et additive des deux vis sans fin une réduction de la pression de contact entre les vis sans fin et la denture de la roue dentée, ce qui diminue considérablement l'usure de la roue tangente et de chaque vis sans fin, et par conséquent diminue les jeux de fonctionnement et les bruits ;
- D'autre part, on obtient une sollicitation optimale de la roue tangente, notamment si les deux vis sans fin sont placées de manière à venir en prise avec cette roue tangente en des points diamétralement opposés, auquel cas les composantes radiales de sollicitation de la roue tangente se neutralisent et la roue tangente travaille donc avec un couple pur.

De plus, la présente invention apporte, par l'unicité du moteur électrique d'assistance, des avantages propres qui sont les suivants :
- Un seul moteur électrique nécessite d'être piloté, ce qui permet de simplifier la commande en évitant les problèmes de commande coordonnée de deux moteurs ;
- Les roues dentées, interposées entre l'arbre de sortie du moteur électrique d'assistance et les deux vis sans fin, procurent avec un dimensionnement judicieux un étage de réduction supplémentaire, qui s'ajoute à celui de l'engrenage à vis sans fin et roue tangente, et qui permet ainsi de réduire la taille du moteur électrique et/ou le diamètre de la roue tangente, d'où un gain d'encombrement s'ajoutant encore à celui résultant de la suppression d'un moteur.

L'invention sera mieux comprise à l'aide de la description qui suit, en référence au dessin schématique annexé représentant, à titre d'exemple, une forme d'exécution de cette direction assistée électrique à double vis sans fin :
Figure 1 est une vue extérieure, en perspective, de la partie
   « motorisation » d'une direction assistée électrique conforme à la présente invention ;
Figure 2 est une autre vue en perspective, montrant plus particulièrement les éléments du réducteur, le carter de celui-ci étant retiré ;

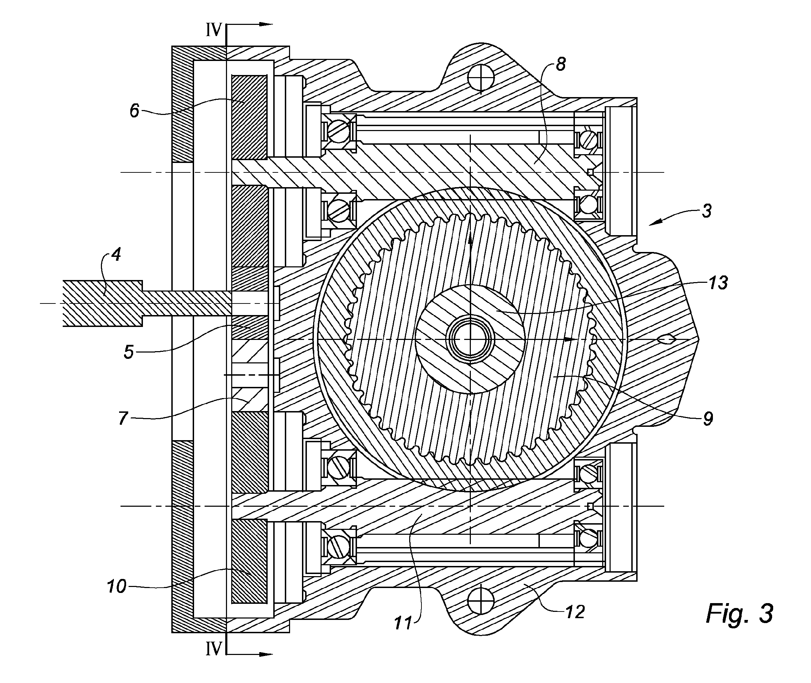

Figure 3 est une vue en coupe du réducteur seul, passant par les axes des deux vis sans fin ;

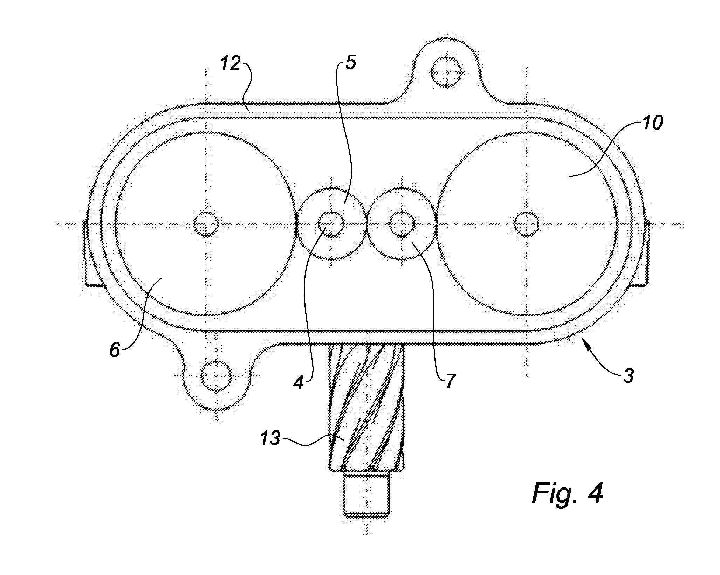

Figure 4 est une autre vue en coupe de ce réducteur, suivant IV - IV de figure 3.

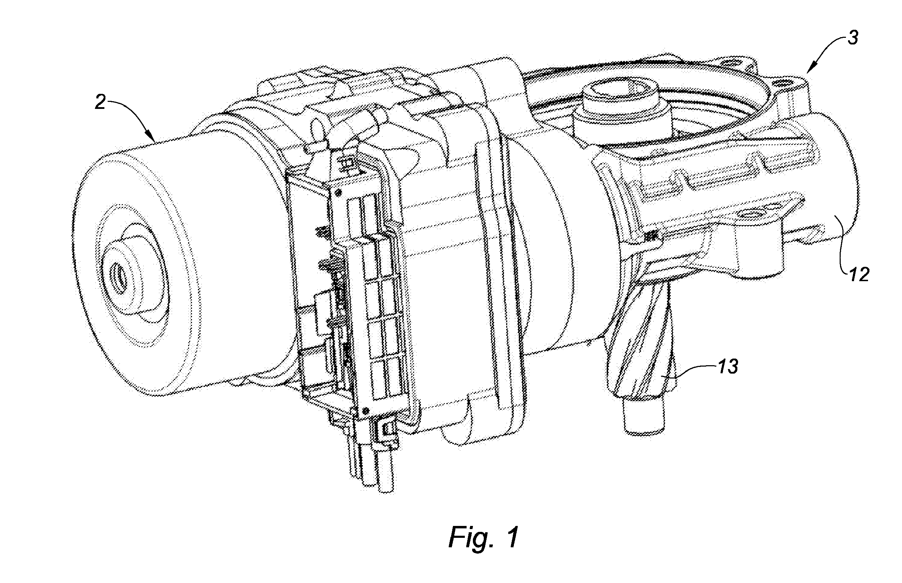

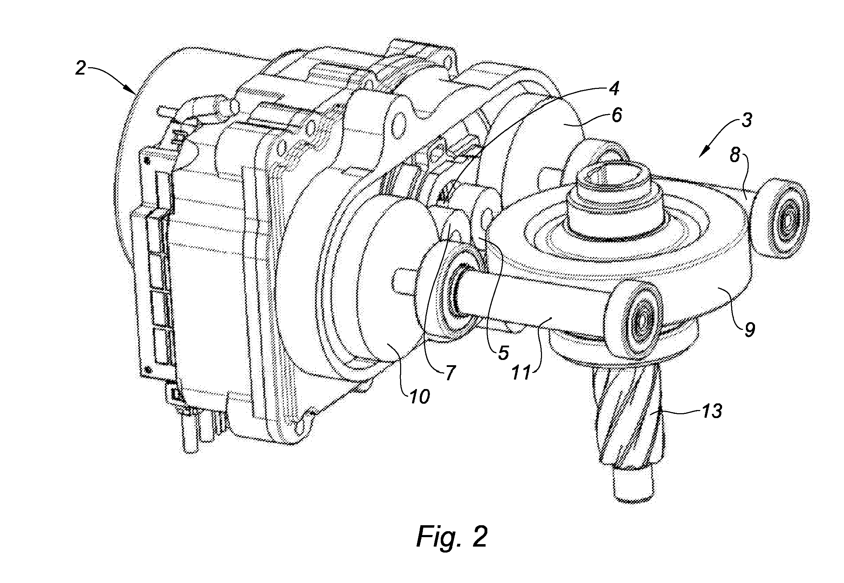

Les figures 1 et 2 représentent la partie « motorisation » d'un système de direction assistée électrique, cette partie comprenant un moteur électrique d'assistance 2 unique et un réducteur 3 à engrenages, placé entre l'arbre de sortie 4 du moteur électrique 2 et un élément (non représenté) à entraîner en rotation, tel que la colonne de direction ou le pignon de direction.

Le réducteur 3 comprend une première roue dentée 5, calée sur le bout de l'arbre de sortie 4 du moteur électrique 2. La première roue dentée 5 est en prise avec deux autres roues dentées 6 et 7, placées de part et d'autre de cette première roue dentée 5, les axes des roues dentées 5, 6 et 7 étant parallèles entre eux.

La roue dentée 6 est solidaire en rotation d'une première vis sans fin 8, en prise avec une roue tangente 9 dont l'axe est orthogonal à l'arbre de sortie 4 du moteur électrique 2. La roue dentée 7 est elle-même en prise avec une dernière roue dentée 10, d'axe parallèle aux précédentes, qui est solidaire en rotation d'une seconde vis sans fin 11, elle aussi en prise avec la roue tangente 9. Les deux vis ans fin 8 et 11 étant parallèles l'une à l'autre, leurs points d'engrènement avec la roue tangente 9 commune sont diamétralement opposés.

L'ensemble des engrenages du réducteur 3, comprenant les quatre roues dentées 5, 6, 7 et 10, les deux vis sans fin 8 et 11 et la roue tangente 9, est logé dans un carter 12 du réducteur 3, ce carter étant supposé retiré dans la représentation de la figure 2.

Dans l'exemple illustré, la roue tangente 9 est directement liée en rotation au pignon de direction 13.

Les deux roues dentées 5 et 7 possèdent le même nombre de dents, et tournent ainsi à la même vitesse de rotation, mais en sens opposés, autour de leurs axes respectifs. Les deux autres roues dentées 6 et 10 possèdent elles aussi le même nombre de dents, qui est supérieur au nombre de dents des roues dentées 5 et 7. Ainsi, les deux dernières roues dentées 6 et 10, respectivement liées en rotation aux deux vis sans fin 8 et 11, tournent elles aussi autour de leurs axes respectifs en sens opposés, et à la même vitesse de rotation qui est inférieure à celle des roues dentées 5 et 7.

En fonctionnement, à un instant où la direction du véhicule nécessite une assistance, le moteur électrique 2 piloté par un calculateur électronique embarqué (non représenté) est alimenté électriquement et son arbre de sortie 4 tourne dans un sens ou dans l'autre, entraînant en rotation avec lui la première roue dentée 5. Cette roue dentée 5 transmet la puissance d'assistance, d'une part, directement à la roue dentée 6 et, d'autre part, indirectement à la roue dentée 10, par l'intermédiaire de la roue dentée 7. Ainsi, les deux roues dentées 6 et 10 sont entraînées en rotation de façon simultanée, ceci en synchronisme mais en sens opposés. Compte tenu du rapport existant entre leurs nombres de dents, l'ensemble des quatre roues dentées 5, 6, 7 et 10 constitue un premier étage de réduction du réducteur 3.

Les deux roues dentées 6 et 10 actionnent respectivement, à la même vitesse de rotation mais en sens opposés, les deux vis sans fin 8 et 11, lesquelles appliquent un couple de rotation à la roue tangente 9, tout en formant un second étage de réduction du réducteur 3. Enfin, la roue tangente 9 transmet ce couple de rotation au pignon de direction 13, lequel actionne la crémaillère (non représentée).

On ne s'éloignerait pas du cadre de l'invention, telle que définie dans les revendications annexées :
- En modifiant la disposition spatiale relative des deux vis sans fin ;
- En réalisant d'une manière différente la liaison d'entraînement entre l'unique moteur électrique d'assistance et les deux vis sans fin ;
- En appliquant l'invention à des directions assistées électriques de tous types, c'est-à-dire intervenant non seulement sur le pignon de direction mais aussi sur la colonne de direction, ou encore directement au niveau de la crémaillère.

## Revendications

1. Direction assistée électrique de véhicule automobile, dans laquelle un moteur électrique d'assistance (2) est accouplé, par l'intermédiaire d'un réducteur de vitesse (3) à vis sans fin et roue tangente, à un élément tournant tel que la colonne de direction ou le pignon de direction (13), ou directement à la crémaillère, **caractérisé en ce qu'**elle comprend un moteur électrique d'assistance (2) unique, dont l'arbre de sortie (4) est lié en entraînement de façon permanente à deux vis sans fin (8, 11) qui sont en prise, en deux points distincts, avec la même roue tangente (9), les deux vis sans fin (8, 11) étant entraînées en rotation de façon simultanée en synchronisme mais en sens opposés.

2. Direction assistée électrique selon la revendication 1, **caractérisée en ce que** les deux vis sans fin (8, 11) sont sensiblement parallèles l'une à l'autre, et viennent en prise avec la roue tangente (9) commune en deux points diamétralement opposés de cette roue.

3. Direction assistée électrique selon la revendication 2, **caractérisée en ce que** l'arbre de sortie (4) de moteur électrique (2) porte une première roue dentée (5), qui est en prise avec deux autres roues dentées (6, 7), dont l'une est solidaire en rotation d'une première vis sans fin (8) tandis que l'autre est elle-même en prise avec une dernière roue dentée (10), solidaire en rotation de la seconde vis sans fin (11).

4. Direction assistée électrique selon la revendication 3, **caractérisée en ce que** les roues dentées (5, 6, 7, 10), interposées entre l'arbre de sortie (4) du moteur électrique d'assistance (2) et les deux vis sans fin (8, 11), sont dimensionnées de manière à procurer un étage de réduction supplémentaire, qui s'ajoute à celui de l'engrenage à vis sans fin (8, 11) et roue tangente (9).
